# EUROPEAN PATENT APPLICATION

(11) **EP 2 210 858 A2**
(43) Date of publication of application: **28.07.2010**
(21) Application number: 10000523.0
(22) Date of filing: 20.01.2010
(51) Int. Cl.: C01B 3/38

(54) **Process and apparatus for reforming of heavy and light hydrocarbons from product gas of biomass gasification**

(30) Priority: 23.01.2009 US 202045 P; 24.12.2009 US 647212
(71) Applicant: Carbona Oy, 00180 Helsinki (FI)
(72) Inventor: Patel, Jitendra G., Vallejo, CA 94591 (US); Konttinen, Jukka, Tampere 33610 (FI)
(74) Representative: HOFFMANN EITLE

(57) **Abstract**

The invention relates to reactor systems and processes for the production of synthesis gas (a mixture of carbon monoxide and hydrogen) from product gas of biomass gasification. A novel reformer catalyst reactor comprising two reaction zones, each operating at a different temperature with a different catalyst are disclosed. Processes for using the reformer catalyst reactor for the production of synthesis gas from process gas are also disclosed. The disclosed reformers and processes allow economical and highly efficient production of synthesis gas with reduced reliance on noble metal catalysts.

## Description

### CROSS REFERENCE TO RELATED APPLICATIONS

This application claims the benefit of priority to U.S. patent application Ser. No. 61/202,045 filed January 23, 2009, and the entire content of said application is hereby incorporated by reference in this application.

### BACKGROUND

Gasification is the process whereby biomass is burned with limited air (gasified) to produce an exhaust gas (also called producer gas). If gasification of biomass occurs at temperatures above 700°C, a gas mixture containing carbon monoxide (CO), hydrogen (H₂) and hydrocarbons (CₓH_{y}) can be generated. Carbon monoxide and hydrogen are useful in the production of chemicals whereas hydrocarbons are inert or harmful in these further processing stages. It is useful to convert the hydrocarbons into carbon monoxide and hydrogen, by reforming in a reformer catalyst reactor. In a reformer reactor, the reforming of hydrocarbons from the biomass exhaust gas is usually carried out in the presence of solid catalytic materials, at temperatures of between 700°C to 1000°C. An oxidant, such as oxygen or air, can be added as additional reactant gases to attain appropriate temperature for reforming.

The active components in these solid catalytic materials include certain metals, such as nickel, zirconia and noble metals such as platinum and rhodium. When noble metals are used as active materials, the costs of the catalyst raw materials are increased to a high level.

In recent experimental testing, it has been observed that, with the more economical nickel-based catalyst materials, the heavier (longer chain) hydrocarbons can be reformed satisfactorily well at temperature of 800°C to 850°C but the lighter hydrocarbons, such as methane, ethane and the like, are not very well reformed. Even at temperature of about 900°C to 950°C the lighter hydrocarbons are not reformed to a very high level. By using more expensive noble metal-based catalysts reforming conversion of heavier hydrocarbons at temperature of 800°C to 850°C can be achieved with about the same efficiency as the nickel based catalyst. However, conversion of lighter hydrocarbons such as methane, ethane, and the like at temperature of 900°C to 950°C is much higher with noble metal based catalyst than that of the nickel based catalyst.

In the processing sequence of biomass gasification for the generation of synthesis gas, the reformer reactor is located after the gasifier for purpose of energy efficiency. The normal operating temperature for gasification of biomass is 800°C to 850°C. Therefore, if the reformer reactor is operated at a temperature higher than that, an oxidant has to be added to the synthesis gas to raise its temperature which results in an overall lower conversion efficiency of biomass to synthesis gas.

U.S. patent no. 6,878,667 refers to a process for producing synthesis gas from light hydrocarbons (e.g., natural gas) and oxygen. More particularly, the invention relates to supported nickel-rhodium based catalysts, their methods of making, and to processes employing such catalysts for net partial oxidation of light hydrocarbons (e.g., natural gas) to products comprising CO and H₂. In this patent, a nickel-rhodium alloy based catalyst comprising about 1-50 weight percent nickel and about 0.01-10 weight percent rhodium on a porous refractory support structure is used. In certain embodiments, the catalyst also contains a lanthanide element, zirconium, cobalt, manganese or magnesium. The patent refers to details of producing different nickel-based catalytic materials in a honeycomb monolith structure, and does not disclose the two part conversion process of the invention. In particular, the patent does not disclose the need for two separate zones in the reformer catalyst reactor each with its own reaction temperature. Also, the patent does not disclose the injection of an oxidizer after the first zone but before the second zone. Finally, the patent does not describe the two part structure of the reformer catalyst reactor of the present disclosure.

U.S. patent no. 6,911,161 refers to Ni-based catalysts and processes that employ such catalysts for catalytically converting light hydrocarbons (e.g., natural gas) to synthesis gas. The Ni-based catalyst is active for catalyzing the net partial oxidation of the hydrocarbon, in the presence of O₂ to CO and H₂. Certain preferred catalysts comprise Ni alloyed with a stabilizing amount of gold and silver, and a lanthanide element, carried on a refractory support. The patent is related to details of producing different nickel-based catalytic materials. In particular, this patent, like the patent above, does not disclose the need for two separate zones in the reformer catalyst reactor each with its own reaction temperature. Also, the patent does not disclose the injection of an oxidizer after the first zone but before the second zone. Finally, the patent does not describe the two part structure of the reformer catalyst reactor of the present disclosure. Actual tars are not considered in this patent because the hydrocarbons in the process are C₁-C₅ and most of that is methane (CH₄).

Finnish patent FI 118647 BB1 presents a method for reforming a gas containing tarry (tar-like) impurities, in which a gas stream, doped with oxygen or oxygen-containing gas, is directed into contact with a solid catalyst. Reforming occurs stagewise. In the first phase, gas is directed into contact with zirconium-based material. In the second phase, the gas is directed into contact with a metal catalyst. The gas can be gasification gas consisting of tarry impurities. The metal catalyst is said to be comprised of metallic nickel or noble metal. The zirconia catalyst consists of zirconium compound, such as zirconium oxide (ZrO₂). Other materials can be aluminum oxide and inert support. The zirconium-based catalyst and metal catalyst are arranged as consecutive layers or zones in the direction of flow of the gas to be reformed. The zirconium-based catalyst and metal catalyst can also be arranged in separate reactors in the flow direction of the gas to be reformed. Oxygen or oxygen-containing gas is added into the gas stream, such as air both before and after the pre-reforming with zirconium-based catalyst, before the reforming with metal catalyst. The reforming temperature is 500-900°C. The metal catalyst can be metallic nickel or noble metal. The zirconium compound prevents carbon formation in the reforming reactor. The patent also refers to preventing deactivation of the nickel- and noble metal catalyst. In the patent, the pre-reforming performed with zirconium-based catalyst is also suggested to take place at a lower temperature (600-800°C) and reforming with the metal catalyst at a higher temperature (700-900°C). However, unlike the current invention, Finnish patent FI 118647 does not disclose the two part reformer reaction chamber with a first zone of noble metal and a second zone of nickel compound with each zone operating at its own optimum temperature.

U.S. Patents 3,791,993; 4,877,550; 5,653,774; 6,242,380 and 6,271,170 refer to nickel based catalysts. U.S. Patents 4,415,484; 4,473,543; 4,503,029 and 4,755,498 refer to, inter alia, noble metal catalysts.

All patents and patent applications referred to in this disclosure are hereby incorporated by reference.

### BRIEF DESCRIPTION OF THE INVENTION

According to a first aspect of the present invention, there is provided a process for the production of synthesis gas from a gas feedstream. In the first step, a gas feedstream comprising carbon monoxide, hydrogen, and a mixture of hydrocarbons is provided. The hydrocarbons may comprise, for example, naphthalene, toluene, methane and mixtures thereof. The gas feedstream may be, for example, a gas feedstream from a biomass gasification process. In the second step, a reformer catalyst reactor comprising a reactor chamber with a first reaction zone with a first catalyst (e.g., a first solid catalyst) and a second reaction zone with a second catalyst (e.g., a second solid catalyst) is provided. In the third step, the gas feedstream is fed through the reformer catalyst reactor through the first reaction zone at a first operating temperature of 800°C to 850°C. Then the gas feedstream is heated to a second higher temperature of 900°C to 950°C. This heating may be performed, for example, by adding an oxidizer to the feedstream to generate a more heated feedstream. After the heating step, the feedstream is fed through the second reaction zone at a temperature of 900°C to 950°C to produce the synthesis gas. In this process, the first catalyst is a non-noble metal catalyst and the second catalyst is a noble metal catalyst.

As stated above, the gas feedstream may be a gas feedstream from a biomass gasification process. The feedstream may further contain tarry impurities. The first catalyst may be a nickel catalyst or nickel based catalyst. The second catalyst may be a noble metal catalyst or noble metal based catalyst. For example, the noble metal may be platinum. The first catalyst or the second catalyst is on an inert support or impregnated in the support. Catalyst supports are known and may include porous supports, pellet supports, honeycomb supports, mesh, fins, wires, honeycomb monolith structures, and combinations thereof. Preferred oxidizers include oxygen or ordinary air (which is more economical), or any combination of the two.

According to a second aspect of the present invention there is provided a reformer catalyst reactor comprising or consisting of the following parts: (a) a reactor chamber with a first reaction zone with a first catalyst (e.g., a first solid catalyst) and a second reaction zone with a second catalyst (e.g., a second solid catalyst); (b) an injector for injecting an oxidizer between the first reaction zone and the second reaction zone. The first catalyst of the reformer catalyst reactor may be a nickel catalyst or nickel based catalyst. The second catalyst may be a noble metal catalyst such as platinum. The reformer catalyst reactor has at least one input port and one output port so that gas may be sent through the input port to contact the first reaction zone, mix with the oxidizer if necessary, contact the second reaction zone and sent out the output port. That is, input gas is sent through the reformer catalyst reactor first through the first zone, then mixed with oxidizer if oxidizer is needed and allowed to oxidize and heat up to the temperature appropriate for the second zone as a heated gas. Then, the heated gas may be sent through the second zone. As can be seen from the description above, the oxidizer is only added to heat the gas to the proper temperature of the second reaction zone. Therefore, the injector for injecting an oxidizer may also contain a valve or a flow controller to regulate the amount of oxidizer added which, in turn, would regulate the temperature of the heated gas.

The two zones of the reformer catalyst reactor may be maintained at different temperatures. For example, the first zone of the reformer catalyst reactor may be kept at a temperature of 800 to 850°C and the second zone may be kept at a temperature of 900 to 950°C. The injector for injecting an oxidizer between the first reaction zone and the second reaction zone may be a port for receiving the oxidizer. The second zone may be kept at a higher temperature by the injection of the proper amount of oxidizer. For example, if the second reaction zone is too low in temperature, more oxidizer may be added. Conversely, if the second reaction zone is too high in temperature, the oxidizer may be reduced. The reformer catalyst reactor may contain temperature probes in the first reaction zone, second reaction zone, or the portion between the first reaction zone and second reaction zone, or any combination or subset of these areas to monitor the progress of the reaction and to adjust the amount of oxidizer added. The reformer catalyst reactor may also contain a preheater for heating the first and second reaction zones to the proper temperature before starting the reaction. Further, the input port and the output port may each contain valves or other flow control devices to regulate the flow of gas to maintain proper reaction conditions including reaction temperatures. The oxidizer may be air, oxygen, and a combination thereof. In the reformer catalyst reactor, about 2/3 to about 3/4 of the total catalyst, in the first reaction zone and in the second reaction zone, may be a nickel or nickel based catalyst. Further, about 1/3 to about 1/4 of the total catalyst, in the first reaction zone and in the second reaction zone, may be a noble metal based catalyst.

It is understood that the apparatus of the invention may be used by the process of the invention. Further, while the reformer catalyst reactor is preferred to be a single reactor it can be made as two or more separate reactors connected by pipes provided that the pipes are sufficiently heated or insulated to maintain the temperature of the reactions. In the case of two reactors, one reactor may contain the nickel catalyst and the other reactor may contain the noble metal catalyst. It is also understood that, throughout this specification, the term "nickel catalyst" also encompasses "nickel based catalyst" and vice versa. The term "noble metal catalyst" also encompasses "noble metal based catalyst" and vice versa.

Another embodiment of the invention is directed to an apparatus or a process as disclosed above but with the following difference. In this embodiment, the first catalyst comprises nickel catalyst or nickel base catalyst and one or more noble metals catalysts which can be in regular, reduced, or significantly reduced amounts. That is, first reaction zone with a first catalyst (e.g., a first solid catalyst) contains both a nickel base catalyst and a noble metal based catalyst. For example, the nickel catalyst or nickel based catalyst may be in the same zone as the one or more noble metals catalysts. Further, the nickel or nickel based catalyst may be in complex, for example by covalent or ionic bond, with the one or more noble metals catalysts.

One advantage of the above-described processes and apparatuses is that above 90% of any toluene and any naphthalene in the gas feedstream is converted. Further, at the same time, above 90% of a methane in the gas feedstream is converted. Conversion refers to the change of a hydrocarbon to another chemical species which is generally of a lower molecular weight. For example, heavier hydrocarbon is converted to lighter species such as lighter hydrocarbons or carbon dioxide, carbon monoxide, hydrogen, water or combinations or subsets thereof.

Another advantage of the above- described processes and apparatuses of the invention is economy. In the process, about 2/3 to about 3/4 of the total catalyst is a nickel or nickel based catalyst. Further, about 1/3 to about 1/4 of the total catalyst is a noble metal based catalyst. Since the noble metal based catalyst is more expensive, by using less of these catalysts, the overall cost of the apparatus and processes are reduced. The total catalyst refers to the sum of the first catalyst and the second catalyst (e.g., by weight or by molar content). Using the process and apparatus of the invention, the use of expensive noble metal based catalyst is significantly reduced.

### BRIEF DESCRIPTION OF THE DRAWINGS

To better understand the present invention, and to show how the same may be carried into effect, reference will now be made by way of example only, to the appended Drawings, in which:

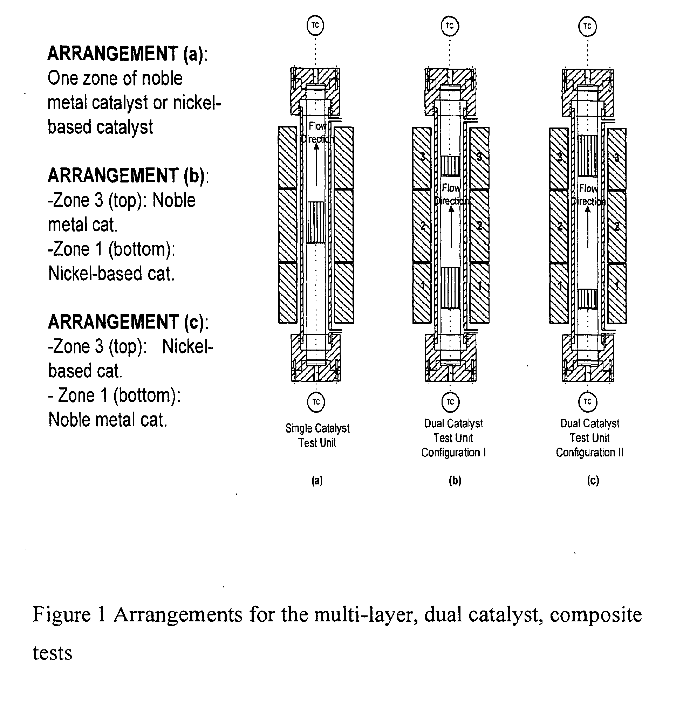

- Figure 1: depicts arrangements for single and multi-layer reformer catalyst reactor. Arrangement (a) refers to one zone of noble metal catalyst or nickel based catalyst. Arrangement (b) refers to Zone 3 (top): noble metal catalyst, Zone 1 (bottom): nickel-based catalyst. Arrangement (c) refers to Zone 3 (top): nickel-based catalyst. Zone 1 (bottom): noble metal catalyst.

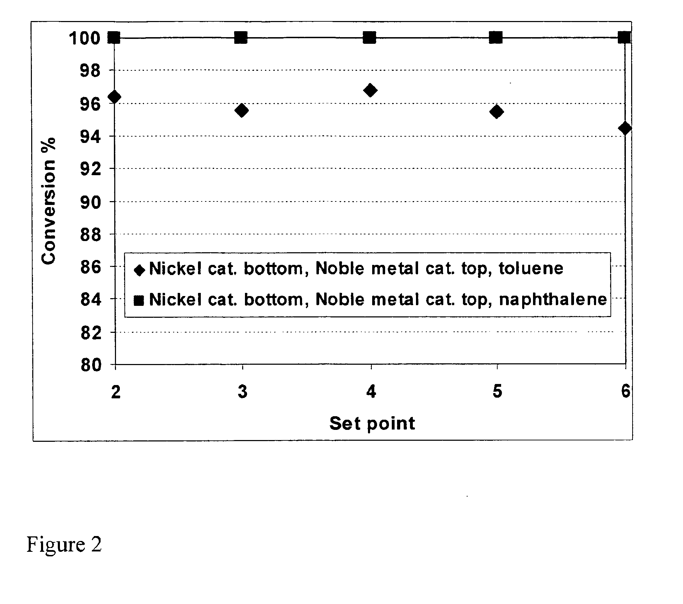

- Figure 2: depicts the conversion percentage of toluene and naphthalene (model chemicals for tar) in a reformer catalyst reactor with two zones. Nickel catalyst is in the first zone (bottom) and encounters the input gas first. Noble metal catalyst is in the second zone and encounters the input gas second - after the gas has passed the first zone.

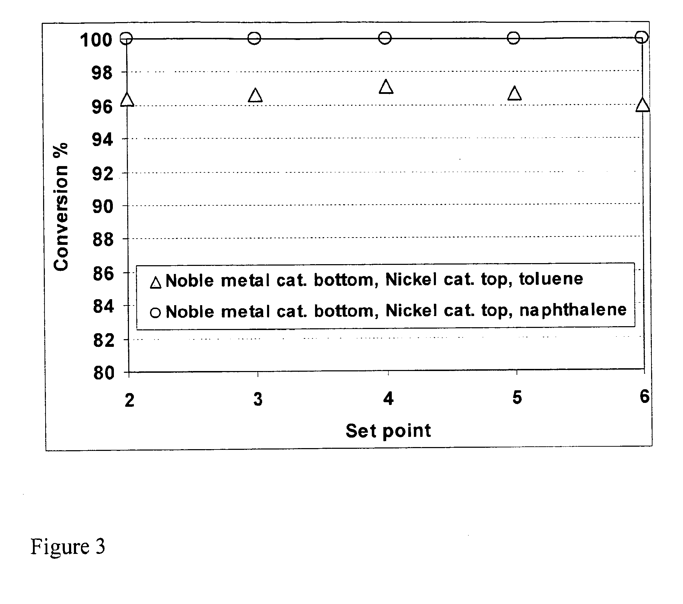

- Figure 3: depicts the conversion percentage of toluene and naphthalene (model chemicals for tar) in a reformer catalyst reactor with two zones. Noble metal catalyst is in the first zone (bottom) and encounters the input gas first. Nickel catalyst is in the second zone and encounters the input gas second - after the gas has passed the first zone.

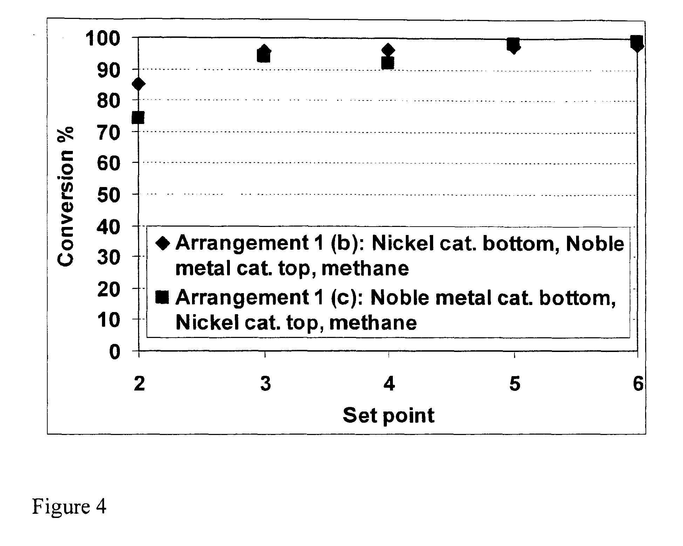

- Figure 4: depicts the conversion percentage of methane in a reformer catalyst reactor with two zones. Nickel catalyst is in the first zone (bottom) and encounters the input gas first. Noble metal catalyst is in the second zone and encounters the input gas second - after the gas has passed the first zone.

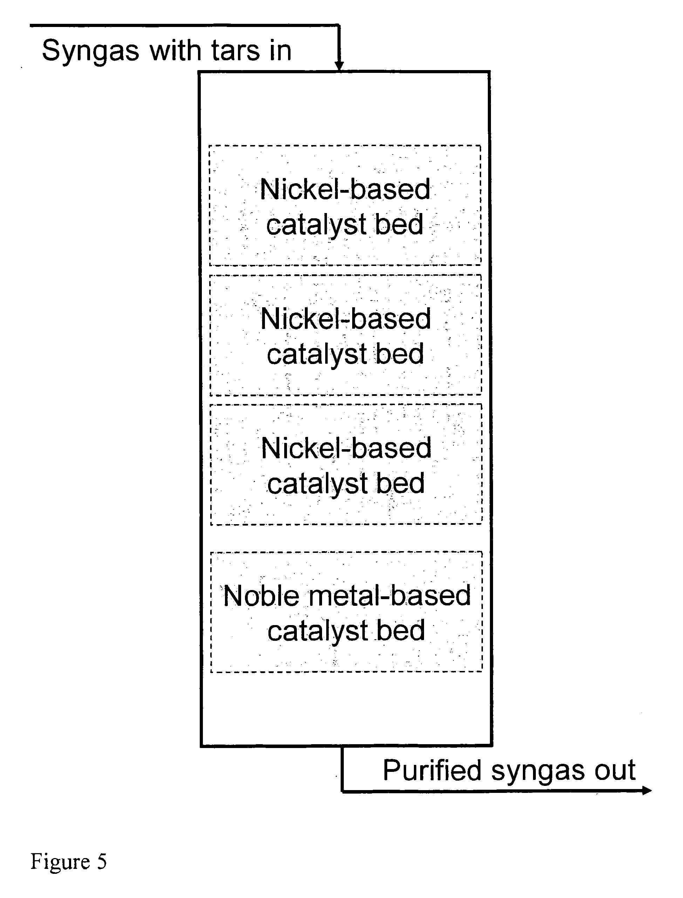

- Figure 5: depicts the best mode of operation of the dual catalyst arrangement in commercial-scale. In a preferred embodiment, the ratio of nickel based
catalyst bed to noble metal based catalyst bed is about 3:1 as depicted in the Figure.

### DETAILED DESCRIPTION OF THE INVENTION

The observations of the test results of the two type of catalyst has led to a novel reformer reactor design that results in the advantages of (1) a higher biomass to synthesis gas conversion efficiency and (2) lower cost of catalyst utilization, and hence lower cost, when compared to conventional reformer reactors.

In this solution a single reformer catalyst reactor comprising two sections connected in series is applied. The two sections each contain a different or a different mixture of catalysts. The first section contains most of the catalyst material. This first section may contain, for example two-thirds or three quarters of the total catalyst material in the single reformer catalyst reactor. The catalyst used in the first section is the relatively less expensive nickel-based catalyst. The second section is smaller and contains one third or one quarter of the total catalyst material of the reformer catalyst reactor. The catalyst used in the second section is the relatively more expensive noble metal catalyst. The two catalysts are arranged into two different zones within the reformer catalyst reactor. The nickel based catalyst zone operates at a temperature of 800 to 850°C which is the same as the gasification temperature. Since the temperature is the same, the biomass gasification exhaust gas not required to be heated by use of an oxidant. In other words, the process disclosed does not require the heating of the biomass gasification exhaust gas. Conventional methods of heating the biomass gasification exhaust gas include the injection of an oxidant (air, oxygen, etc.) air and/or oxygen into the biomass gasification exhaust gas. Since the methods of this disclosure do not require heating, it follows that the methods also do not require injection of air, oxygen, or an oxidant into the biomass gasification exhaust gas.

As the biomass gasification exhaust gas passes through the first section, most of the heavier hydrocarbons are reformed (up to 98 to 100%) as are some of the lighter hydrocarbons. After the biomass gasification exhaust gas passes through the first section, it is routed into the second section. The second section comprises noble metal based catalyst(s) and is operated at a higher temperature of 900°C to 950°C. To bring the biomass gasification exhaust gas (which has been converted by the first section) into the temperature required for the second section, an oxidant (air, oxygen, etc) is injected to the biomass gasification exhaust gas at this point to bring the temperature to 900°C - 950°C. By the time the oxidants (air, oxygen, etc) are added, the gas has already passed the first section. In the second section, most of the remaining lighter hydrocarbons are reformed (up to 90 to 95%) as well as some of the remaining heavier hydrocarbons. Using this novel method, the high reforming conversion of all hydrocarbons can be achieved in a single reactor at relatively higher efficiency and lower cost compared to existing practice.

What is novel and claimed in this disclosure is a process and method to reform both heavy and light hydrocarbons to a high level of conversion inside one single catalytic reformer reactor, using different catalyst materials that increase overall conversion efficiency of biomass to synthesis gases at a lower cost. The reactor consists of two zones each operating at its own optimum process conditions to yield maximum conversion of heavy and light hydrocarbons in their respective zones. No pre-reforming material, such as zirconia-based catalysts, is required. In a preferred embodiment of the apparatus and process of the invention, the apparatus does not contain a zirconia-based catalyst and the process does not involve a zirconia-based catalyst.

The operation principle of the new invention presented here is different from the disclosure of FI 118647 since both or all catalytic materials are metal oxides. No zirconium-based materials for pre-reforming purposes are required. What is new also here is that, by using nickel- and noble metal catalysts, the consumption of oxygen is minimized when compared to the disclosure of FI 118647.

### EXAMPLES

### Example 1: Testing of the multi-layer dual catalyst reactors.

Reformer catalysts are typically tested with the "single catalyst test unit" arrangement as shown in Figure 1(a). Please note that while catalyst units may be oriented in any direction, it is illustrated in Figure 1 with the flow from the bottom to the top. That is, the bottom catalyst will contact the gas flow first. The top catalyst will contact the gas flow second - after the gas has flowed passed the first catalyst.

In this arrangement, a sample of solid catalyst is put into an externally heated oven. The solid catalyst material comprises a structure made with the one or more active catalyst materials (active catalyst sites) which also comprises pores and holes to enable gases to flow through and get into contact with the one or more active catalyst materials. In the laboratory tests, the tested catalyst samples have been either nickel-metal based or noble metal based. The externally heated oven is heated up to typical process temperatures of 700-1000°C. The catalyst sample in the oven can also be pressurized to the preferred test pressures of 1 - 30 bar.

A simulated gas mixture allowed to flow through the catalyst. The purpose of the simulated gas mixture is to simulate tar-containing syngas (synthesis gas). Tar in the gas is simulated with hydrocarbon compounds such as naphthalene (C₁₀H₈) and toluene (C₇H₈). In addition, the gas also contains typical syngas components such as carbon monoxide (CO), hydrogen (H₂), methane (CH₄), carbon dioxide (CO₂), steam (H₂O) and an inert nitrogen (N₂), used as carrier gas. A typical composition of the simulated gas is shown in the following Table 1.

**Table 1**

| **Main Feed Gas Comp.** | **Wet Feed, Volume %** |
|---|---|
| H₂ | 22.25 |
| CO | 21.28 |
| CO₂ | 21.28 |
| CH₄ | 5.8 |
| H₂O | 24.18 |
| O₂ | 3.27 |
| H₂S | 0.0093 |
| NH₃ | 0.0000 |
| Model Tar Compound(s) - Naph + Tol | 0.2500 |
| N₂ | 1.6807 |
| | 100.00 |

The simulated gas mixture is allowed to flow through the heated and pressurized catalyst. The idea is that the catalyst will decompose the hydrocarbon (tar) compounds, via the reforming reactions, which in the presence of steam are in the following format:

CₙH₂ₙ₊₂ + nB₂O ⇒ nCO + (2n+1)H₂

The composition of the simulated gas, including the hydrocarbon content, is measured before and after the reactor. From the test results of "single catalyst test unit" arrangement according to Figure 1(a) it can be concluded that with both nickel- and noble metal based catalysts an almost complete tar (naphthalene and toluene) reforming conversion can be achieved at temperatures above 900°C. At the same conditions with noble metal catalysts, a high reforming conversion of methane (CH₄) has been achieved, over 90%. Conclusions of the experimental results on the conversions of naphthalene, toluene and methane as function of reactor temperature are shown in the following Tables 2 and 3.

**Table 2: Conversion at Temperature 850°C**

| | Naphthalene | Toluene | Methane |
|---|---|---|---|
| | % | % | % |
| Noble Metal | 98-100 | 93-96 | 50-70 |
| Nickel | 80-100 | 85-90 | 10-20 |

**Table 3: Conversion at Temperature 900-930°C**

| | Naphthalene | Toluene | Methane |
|---|---|---|---|
| | % | % | % |
| Noble Metal | 100 | 95-97 | 83-95 |
| Nickel | 100 | 94-96 | 25-50 |

The "dual catalyst test configuration" in Figure 1(b) differs from the single catalyst arrangement of Figure 1(a) so that the reactor consists of different catalysts in different zones. A nickel-based material is inside the lowest zone 1. The gases enter this catalyst first, after which they flow through the empty zone 2, followed by zone 3, which consists of a noble metal-based catalyst. The test configuration of Figure 1(c) is otherwise the same as in Figure 1(b), except the noble-metal based catalyst is in zone 1 and nickel-based in zone 3.

In the dual catalyst test configuration, the following temperatures, shown in Tables 4 and 5, were used in zone 1 and zone 3.

**Table 4: Arrangement 1(b)**

| Set Point | 2 | 3 | 4 | 5 | 6 |
|---|---|---|---|---|---|
| Zone 3 TOP: (Noble Metal Cat.) Temp °C | 850 | 925 | 925 | 925 | 925 |
| Zone 1 BOTTOM: (Nickel Catalyst) Temp °C | 850 | 850 | 850 | 925 | 925 |
| O₂ Concentration % | 3 | 3 | 0 | 0 | 3 |

**Table 5: Arrangement 1(c)**

| Set Point | 2 | 3 | 4 | 5 | 6 |
|---|---|---|---|---|---|
| Zone 3 TOP: (Nickel Catalyst) Temp °C | 850 | 850 | 850 | 925 | 925 |
| Zone 1 BOTTOM: (Noble Metal Cat.) Temp °C | 850 | 925 | 925 | 925 | 925 |
| O₂ Concentration % | 3 | 3 | 0 | 0 | 3 |

The tar reforming conversion results from the dual catalyst configuration tests are shown in Figures 2-4.

The advantage of the dual catalyst test configuration (Figures 1 (b) and (c)), in comparison with the single catalyst test arrangement (Figure 1 (a)), is that in the same reactor, by combining the two different catalyst materials, a high tar (naphthalene and toluene) reforming conversion and high methane (CH₄) reforming conversion can be achieved. For example, in setup 4, the tar (naphthalene and toluene) conversion is over at least 96% and methane conversion is over at least 90%. In contrast, using noble metal alone or nickel alone, tar (naphthalene and toluene) conversion is less than at most 96% and methane conversion is less than at most 70% at 850°C. Therefore, it is clear that this level of conversion of tar and methane would not be possible by using either noble- or nickel metal-based catalyst alone. In addition, the overall cost of the reactor is reduced when compared to the noble metal only reactor because noble metal is used only in a part of the reactor.

Figure 5 shows how the idea of the dual catalyst arrangement can be applied in a commercial-scale tar reformer reactor. In this configuration, tar-containing syngas is fed from above the reformer reactor and is first let into contact with several zones of nickel-based catalysts. In the other end of the reactor, after exiting the nickel-based materials, the syngas gets into contact with the noble metal based catalyst. After that the syngas exits the reformer reactor, and the tars and methane have been converted in the reforming reactions. In an optional step, oxidizers are injected between the Nickel based catalyst bed and the noble metal based catalyst bed to increase the temperature of the gas to the optimal temperature for the noble metal based catalyst bed. Typically the total amount of nickel catalyst material is much higher than the amount of noble metal catalyst. The advantage of this is that high hydrocarbon and methane conversion can be achieved together with reasonable investment costs of the catalyst materials. It is understood that while Figure 5 and other discussions in this disclosure depict gas flow from one orientation, the gas flow and the reactor are not limited in this invention and may be oriented in any direction including from bottom to top, top to bottom, or any angle in between.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A process for the production of synthesis gas from a gas feedstream comprising the steps of:
a) providing a gas feedstream comprising carbon monoxide, hydrogen, and a mixture of hydrocarbons;
b) providing a reformer catalyst reactor comprising a reactor chamber with a first reaction zone with a first catalyst and a second reaction zone with a second catalyst,
c) feeding said gas feedstream through the first reaction zone at a first operating temperature of 800°C to 850°C;
d) heating said gas feedstream from said first operating temperature to a second operating temperature of 900°C to 950°C by adding an oxidizer to the feedstream to generate a heated feedstream;
e) feeding the heated feedstream through the second reaction zone at a temperature of 900°C to 950°C to produce said synthesis gas, wherein the first catalyst and the second catalyst are either (i) or (ii):
(i) the first catalyst is a non-noble metal catalyst and the second catalyst is a noble metal catalyst or noble metal based catalyst;
(ii) the first catalyst comprises one or more nickel based catalyst and one or more noble metal catalysts, and the second catalyst comprises one or more noble metal catalysts.

2. The process of claim 1, wherein the gas feedstream is a biomass gasification feedstream.

3. The process of claim 1 or 2, wherein the gas feedstream comprises tarry impurities.

4. The process of any one of claims 1 to 3, wherein said first catalyst and/or said second catalyst are solid catalysts.

5. The process of any one of claims 1 to 4, wherein said first catalyst is a nickel catalyst or nickel based catalyst.

6. The process of any one of claims 1 to 5, wherein the noble metal is platinum.

7. The process of any one of claims 1 to 6, wherein said first catalyst and/or said second catalyst is on an inert support or impregnated in an inert support.

8. The process of any one of claims 1 to 7, wherein said oxidizer is selected from the group consisting of air, oxygen, and a combination thereof.

9. The process of any one of claims 1 to 8, wherein above 90% of toluene and naphthalene in said feedstream, and/or above 90% of methane in said gas feedstream is/are converted.

10. The process of any one of claims 1 to 9, wherein 2/3 to 3/4 of a total catalyst is a nickel or nickel based catalyst and/or wherein 1/3 to 1/4 of a total catalyst is a noble metal based catalyst,
the total catalyst being a sum of the first catalyst and the second catalyst.

11. A reformer catalyst reactor comprising:
a reactor chamber with a first reaction zone with a first catalyst and a second reaction zone with a second catalyst;
an injector for injecting an oxidizer, which is preferably selected from the group consisting of air, oxygen, and a combination thereof, between said first reaction zone and said second reaction zone.

12. The reformer catalyst reactor of claim 11 wherein said first catalyst is a nickel catalyst or nickel based catalyst, and/or wherein said second catalyst is a noble metal catalyst, preferably a platinum catalyst.

13. The reformer catalyst reactor of claim 11 or 12, wherein said injector for injecting an oxidizer between said first reaction zone and said second reaction zone is a port for receiving said oxidizer.

14. The reformer catalyst reactor of any one of claims 11 to 13, wherein 2/3 to 3/4 of a total catalyst is a nickel or nickel based catalyst and/or wherein 1/3 to 1/4 of a total catalyst is a noble metal based catalyst,
the total catalyst being a sum of the first catalyst and the second catalyst.

15. The reformer catalyst reactor of any one of claims 11 to 14, wherein the first catalyst comprises one or more nickel based catalysts and one or more noble metal catalysts, and the second solid catalyst comprises one or more noble metal catalysts.
